Europäisches Patentamt

European Patent Office

Office européen des brevets

(11) Publication number: **0 055 125**
**B1**

## (12) EUROPEAN PATENT SPECIFICATION

(45) Date of publication of patent specification: **11.12.85**

(21) Application number: **81306036.5**

(22) Date of filing: **22.12.81**

(51) Int. Cl.⁴: **G 01 H 1/00, G 10 K 15/04, G 01 N 29/04**

(54) Apparatus for generating acoustic waves.

(30) Priority: **22.12.80 US 219092**

(43) Date of publication of application:
**30.06.82 Bulletin 82/26**

(45) Publication of the grant of the patent:
**11.12.85 Bulletin 85/50**

(84) Designated Contracting States:
**BE DE FR IT SE**

(56) References cited:
TECHNICAL REVIEW, nr. 2, February 1979,
NAERUM (DK), T. LICHT: "Acoustic emission",
pages 3-41
SOV. PHYS. ACOUST., vol. 21, nr. 2,
March/April 1975, NEW YORK (US), S.L.
DAVYDOV et al.: "Generation of acoustic step
pulses by brittle fracture", page 184
TECHNISCHES MESSEN, vol. 47, nr. 11,
November 1980, MÜNCHEN (DE), J. KOLERUS:
"Schallemissionsanalyse", pages 389-394
TECHNISCHES MESSEN, vol. 47, nr. 12,
December 1980, MÜNCHEN (DE); J. KASSER et
al.: "Prüfung industrieller Bauteile mit Hilfe der
Schallemissionsanalyse", pages 435-440

(73) Proprietor: **WESTINGHOUSE ELECTRIC CORPORATION**
**Westinghouse Building Gateway Center**
**Pittsburgh Pennsylvania 15222 (US)**

(72) Inventor: **Rao, Gutti Varaprasada**
**1250 Scenic Drive**
**Latrobe Pennsylvania (US)**
Inventor: **Gopal, Raj**
**1620 Branning Road**
**Pittsburgh Pennsylvania (US)**

(74) Representative: **van Berlyn, Ronald Gilbert**
**23, Centre Heights**
**London, NW3 6JG (GB)**

Courier Press, Leamington Spa, England.

## Description

This invention relates generally to an apparatus for generating acoustic waves and, more particularly, to an apparatus for the simulation of true acoustic signal of physical origin as can be used for on-line evaluation of an acoustic surveillance system. The invention is applicable particularly for crack and flaw monitoring with the vessel and piping of a pressurized water reactor.

It is important with a pressurized water reactor installation to be able to reliably detect a flaw or a crack as it is formed or developing in the reactor vessel well before it reaches dangerous proportions. It it well known that such flaws or cracks which originate in metallurgical local defects, stresses or transformations cause an acoustic emission. Accordingly, it has been proposed to install transducers for the detection and location of the defects propagated through the vessel wall through the detection of acoustic waves. The difficulty lies in recognizing from the transducer signal whether it originates in a true wall defect. To ascertain the nature of the signals, the prior art utilizes an electronically synthesized signal for comparison with the received signals. The weakness of such a technique lies in that an electrical waveform, which has no relation to a real signal of physical origin, is used as a standard. Such "synthetic" waveform signals, even a simulation of acoustic signal, are not true acoustic signals, e.g. that are characteristic of material deformation. True acoustic signals are required for a periodic on-line evaluation of an acoustic surveillance system to ensure the detectability of incipient flaw growth at the pressure boundary of a nuclear vessel or piping. It is not sufficient to use a single generator for simulating acoustic signals, since it is unreliable to use signals of unknown physical origin or totally unrelated to the very event to be detected, namely, the energetics of a deformation zone in the metallic wall of a reactor vessel or in the piping.

Attempts have been made to generate predetermined true acoustic signals instead of a mere synthetic signal for the purpose of a standard comparison, but these have resulted in poor approximations.

Indeed, the effectiveness and merit of an acoustic monitoring system for pressure boundary integrity surveillance of a nuclear pressure vessel rest mainly upon its ability to identify acoustic signals generated as a result of material deformation accompanying flaw growth experienced by the vessel while the reactor is under operating conditions.

In the absence of a true signal available at the time of testing, an object of the present invention is to generate signals in situ and at will which will be caused by the deformation of a test sample of the same material as the vessel wall, or piping, and to use such signals for evaluation of the monitoring and surveillance system. Attempting to generate such signals by deforming the test sample under mechanical means at the vessel site appeared highly impractical due to the problems involved in setting up a test rig at the site and in eliminating noise signals due to the system for mechanically loading the test rig. A simple and more effective way of generating true acoustic signals appeared to be needed.

The prior art includes Technical Review article entitled "Acoustic Emission" by Torben Licht in No. 2, 1979, pages 3—41 which relates to the use of acoustic emission for non-destructive testing and from which the preamble of claim 1 may be derived.

Another example of the prior art is found in Technisches Messen, volume 47, No. 11, November 1980, entitled "Schallemissions-analyse" which relates to the propagation of sound in solids.

It is, therefore, an object of the present invention to provide an improved method and apparatus for generating acoustic waves with a view to overcoming the deficiencies of the prior art.

Another object of the present invention is to generate in a simple and more effective way acoustic waves from the deformation of a sample of metallic material.

Still another object of the present invention is to provide a portable source of acoustic waves due to the physical transformation of an alloy in the nature of a ductile deformation or of a brittle deformation.

Still another object of the present invention is an improved acoustic surveillance system for the early detection of flaws and crack formations in the piping or the vessel wall of a pressure water reactor, through the generation of true acoustic signals to be used as a standard of comparison with actual acoustic signals propagated through the piping or vessel wall under incipent flaw and/or cracks.

The invention also resides in an acoustic signal generator system comprising: a sample of metal alloy with an austenite phase which changes into martensite; transducer means to convert acoustic waves generated by said sample upon transformation of austenite into martensite into an electrical signal characterized by said sample being a composition of iron and nickel, means for cooling said sample to substantially transform said austenite phase into martensite; means associated with said sample for propagating acoustic waves emitted by said austenite to martensite transformation toward a remote body to which the transducer means is coupled.

Other embodiments of the invention are set out in claims 5—11.

In accordance with a preferred ebodiment of this invention, there is provided an improved apparatus for generating acoustic waves which is representative of a deformation resulting from the growth of a structural defect, or flow, in a metallic wall which may be part of piping or of a vessel in a nuclear installation.

To ensure reliability, the monitoring and surveillance system is periodically evaluated by making it respond to predetermined acoustic signals generated by known metal stresses purposely developed and propagated through the vessel. With the assistance of the occurrence of such predetermined acoustic signals imparted when desired, the monitoring and surveillance system can be evaluated, checked, calibrated, or otherwise set in condition for the future detection of a true event, e.g., either a ductile deformation, which is less critical or a brittle deformation, which is more critical flaw growth.

When there is at most 29.7% nickel, such austenite to martensite transformation simulates the formation of a substructure which is characteristic of a ductile flaw (less critical) growth in the piping or vessel wall, whereas with at least 30% nickel the transformation is indicative of a brittle (more critical) flaw growth in the piping or vessel wall.

A surveillance and monitoring system which involves a plurality of transducers placed at strategic locations on the piping or vessel wall, can be from time to time calibrated by means of metal samples cooled by the aforementioned method so that acoustic signals which simulate actual flaws are detected by the transducers. As a result, the integrity of the piping or vessel wall is verified by a surveillance and monitoring system which is effective and reliable at all times.

The invention will become readily apparent from the following description of an exemplary embodiment thereof when read in conjunction with the accompanying drawings, in which:

Figure 1 is a microscopic view of a metallurgical substructure developed during "lath" martensitic formation in an alloy of iron and 29.1% nickel;

Fig. 2 is a microscopic view of a metallurgical substructure representing brittle deformation developed during "plate" martensitic formation in an alloy having iron and 32% nickel;

Fig. 3A shows the amplitude distribution plot of acoustic emission signals characteristic of ductile (less critical) deformation as in the case of Fig. 1;

Fig. 3B shows the amplitude distribution plot of acoustic emission signals characteristic of brittle (more critical) deformation as in the case of Fig. 2;

Fig. 4 shows the acoustic wave generating apparatus according to a preferred embodiment of the present invention;

Fig. 5 shows circuitry which is typical of a vessel integrity monitoring system.

The invention is based on a systematic study of microstructural changes due to martensitic transformation in Fe—Ni alloy systems and on the observation of the resulting acoustic emission.

A Fe—Ni alloy system has been selected because of two most favorable aspects: (1) in the course of its transformation such a system leads to a new structure induced by the generated deformation; (2) an initially stable phase exists at room temperature, namely austenite.

Passing from the initially stable phase to another phase by dynamic change is easily achieved through cooling of the austenite phase from room temperature. Typically, alloy samples used are ferrous alloys having a nickel content ranging from 29% to 32%. With such an alloy cooled, acoustic monitoring of the transformation occurring at low temperature has revealed a continuous emission of acoustic waves from the start to the end of the transformation. Experiments conducted with alloys of different nickel percentages in the aforementioned range show that the amplitude of the detected acoustic signals increases with increasing amounts of the nickel content. Moreover, it was discovered by optical metallography study of the samples, that a morphological transition takes place when the proportion of nickel traverses a critical amount of 29.7% Ni. This critical amount delineates the passage of the martensite phase from "Lath" martensite below 29.7% Ni to "Plate" martensite above 29.7%. In this regard, a further study using electron microscopy has revealed that acoustic transmission with different samples experiencing these two kinds of transformations is due to a heavy dislocation when it is "Lath" martensite, whereas it is due to twinning internally with "Plate" martensite.

In accordance with the preferred embodiment of this invention, it is proposed to associate "Lath" martensite, or heavy dislocation, to the situation occurring when, in a vessel or piping, for instance, metal is experiencing flaw growth in a ductile (or less critical) manner, and to derive acoustic signals characteristic of such internal deformation as typical of an actual flow of the same nature in real situation.

It is also proposed to associate "plate" martensite to the situation occurring when, in a vessel or piping, for instance, metal is experiencing flaw growth in a brittle (or more critical) manner, and to derive acoustic signals characteristic of such internal deformation as typical of an actual flaw of the same nature in real situation.

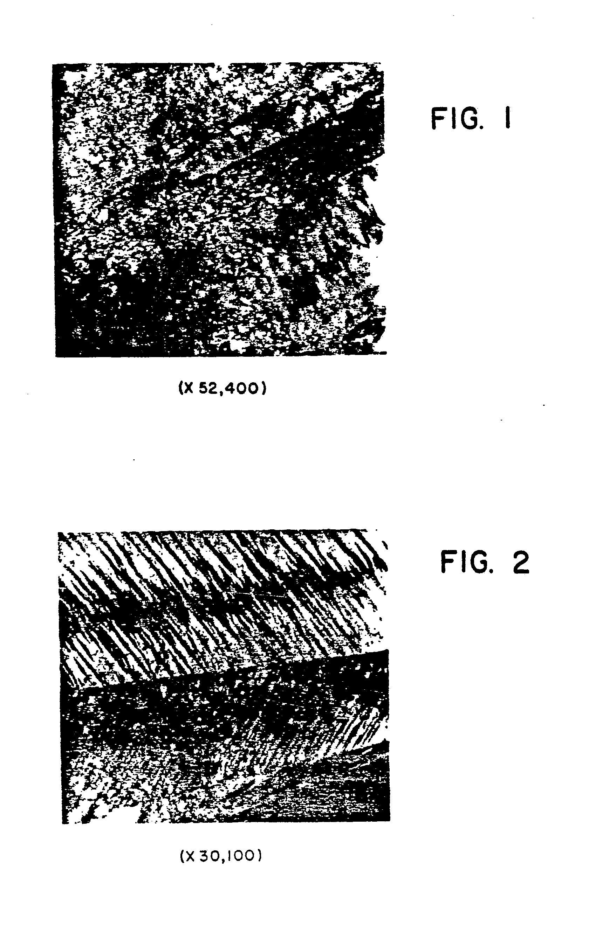

Figure 1 is a macroscopic view of "Lath" martensite (less than 29.7% of nickel) showing heavy dislocation as typical. Figure 2 is a macroscopic view of an internally twinned "Plate" martensite sample (more than 29.7% nickel).

It has been established that in the first instance, namely with Ni contents up to 29.7% of nickel, the transformation causes an acoustic emission which is representative of a heavy dislocation substructure. Hence, the emitted standard acoustic signal can be used as a standard signal to recognize in the plastic zone of a reactor vessel, that typically is the plasticity of a growing flaw in a relatively tough matrix. It has also been established that, where the Ni content is above 30%, the emitted acoustic signal is symptomatic of twinning, e.g., should be characteristic of a brittle deformation like in a crack forming situation. For intermediate compositions, e.g. with the Ni content lying between 29.7% and 30%, a mixed dislocation and twinning structure exists. In such case, acoustic emission is applicable to the detection of a signal representative of a mixed mode of deformation.

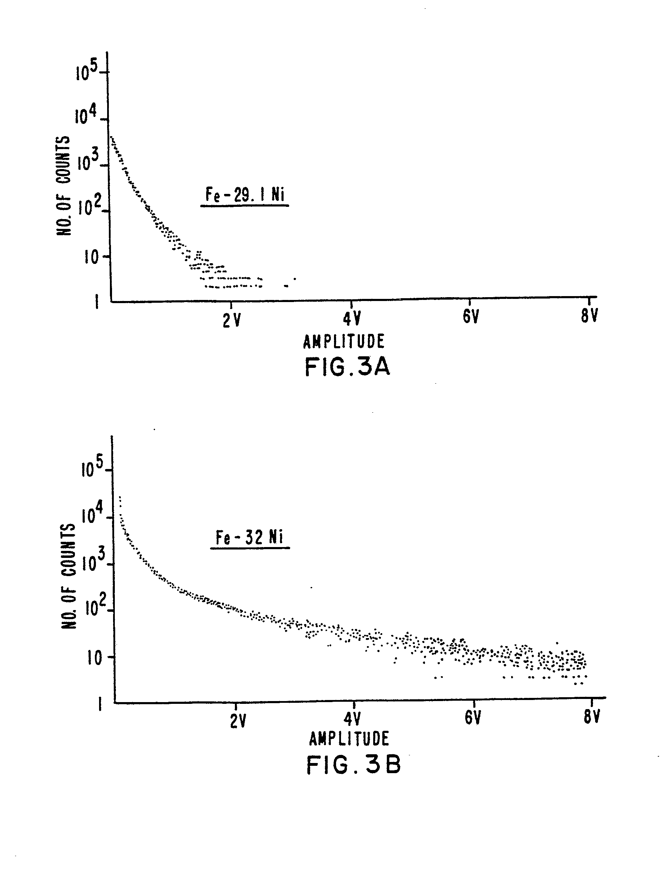

Referring to Figures 3A and 3B, the amplitude distribution of acoustic emission during transformation from austenite to martensite is shown as recorded for the two Fe—Ni compositions of Figures 1 and 2, respectively.

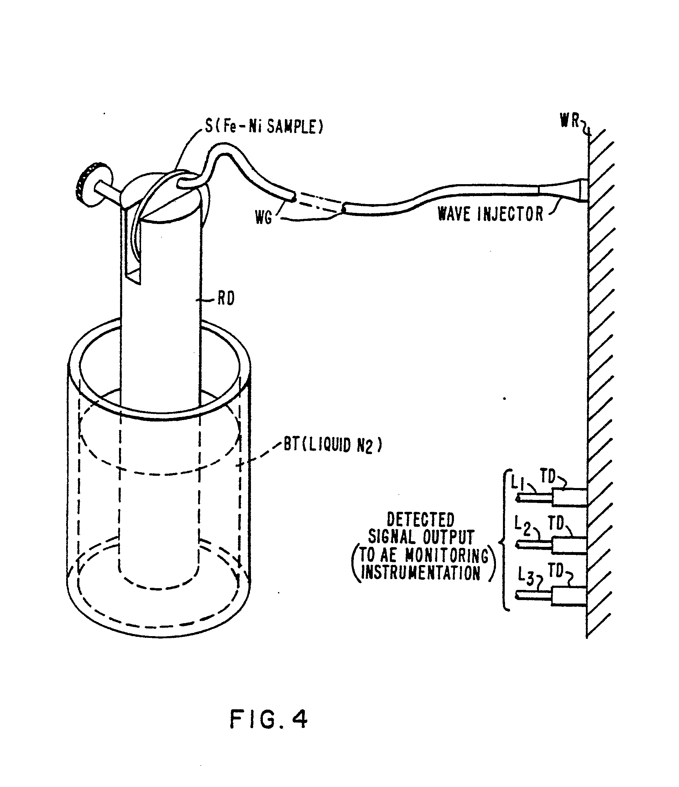

A disc-shaped sample S of metal alloy of iron and nickel of selected proportion as explained hereabove, is heat treated to austenite condition. Sample S is, thereafter, mounted at one end of a copper rod RD, as shown in Fig. 4, and the opposite end of rod RD is immersed into a bath of liquid nitrogen BT. By thermal conductance through rod RD, the temperature of sample S is progressively lowered from room temperature down to −172°C (−270°F), the duration of cooling being in the range of 15 minutes to half an hour. In the process, austenite is converted to martensite. The phase deformation causes abrupt internal microstructural changes. These changes are transmitted acoustically by a wave guide WG onto the wall of the reactor WR, which is the pressure boundary region under surveillance. The acoustic waves so generated are detected by the transducers TD of the surveillance system which are mounted on the surface of the pressure boundary WR. Thus, the microstructural changes are translated into acoustic signals of a duration varying between 50 and 200 milliseconds. Thus, the acoustic waves transmitted by the wave guide WG are converted into electrical signals representing true physical events. At least two specimens of alloy experiencing martensite transformation are preferably used, which, as explained herebefore, are 1) a percentage of nickel to iron of up to 29.7% for the simulation of a ductile (less critical) form of crack; 2) a percentage of at least 30% Ni, a composition for which the sample generates acoustic waves which are typical of a brittle (more critical) material change. The possibility is not excluded of using a sample in the range between 29.7% and 30% Ni in which case the same sample could be used to simulate either situations of a ductile and a brittle type of metal flaw.

The several transducers TD are judicially placed against the wall of the vessel, or piping, and are part of a monitoring and surveillance system used to detect and locate the source of the generated acoustic waves due to a defect in the nuclear system. During simulation the acoustic waves generated are from the sample S experiencing structural transformation under cooling by bath BT, as just explained. After evaluation of the monitoring and surveillance system and calibration with such simulated flaw detecting signals, transducers such as TD are in a position to detect, at any moment, an actual defect developing in the metal of the vessel wall or piping.

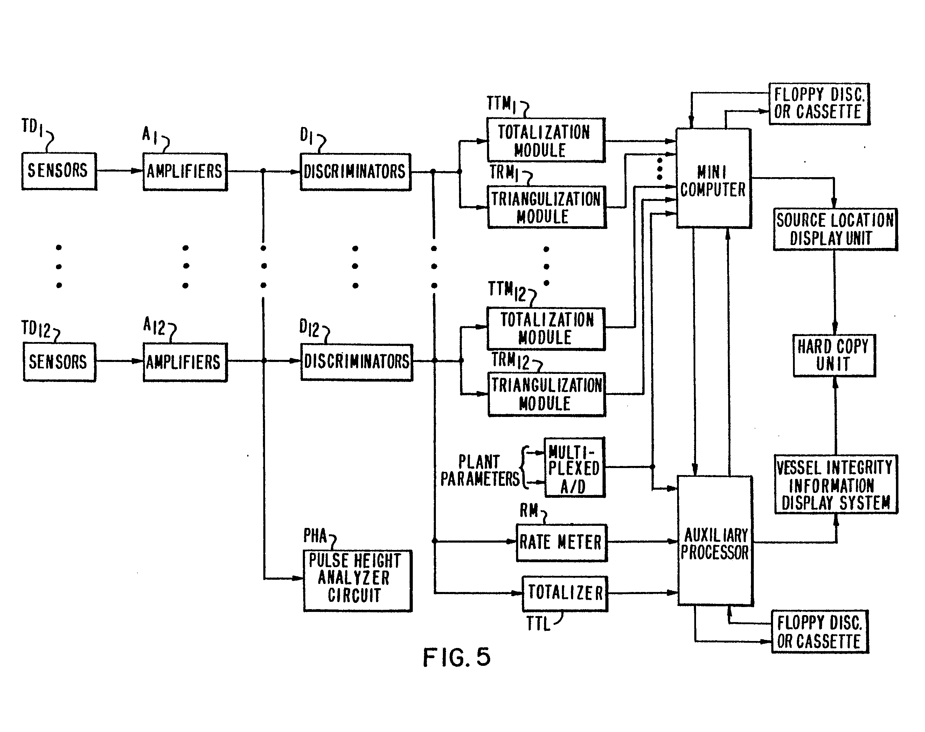

Referring to Fig. 5, a monitoring and surveillance system is shown, which is typically responsive to twelve channels originating in twelve transducers $TD_1 \ldots TD_{12}$. At any given moment, an acoustic emission signal of a particular intensity, duration and shape is received by one or all of transducers $TD_1 \ldots TD_{12}$, amplified by respective amplifiers $A_1 \ldots A_{12}$; passed through a discriminator ($D_1 \ldots D_{12}$); processed by a totalization module ($TTM_1 \ldots TTM_{12}$), and a triangularization module ($TRM_1 \ldots TRM_{12}$). The rate is measured by a common rate meter RM. The total energy developed is measured by a totalizer. The overall information is compared, analyzed, logged, and more generally treated by a computer shown to include a minicomputer with the assistance of an auxiliary processor.

Since the simulated signals obtained according to the system of the present invention have characteristics which are compatible with those of an actual signal due to an existing flaw, the monitoring system of Fig. 5 can be periodically run under simulation with samples such as S for the aforementioned two classes of defects.

The signals from amplifiers $A_1—A_{12}$ due to the sample S or to an actual flaw being detected are inputted into a pulse height analyzer circuit PHA. Circuit PHA during simulation permits ascertaining that the system is in condition to provide signals which in the ductile deformation situation are like those shown by Fig. 3A and in the brittle deformation situation are like those Fig. 3B, thus in accordance with curves verified by laboratory experiments. Accordingly, whenever a real flaw occurs in the vessel or piping, the pulse height analyzer PHA will show a plot of the same nature as in Fig. 3A or Fig. 3B.

It is observed that while some effect is obtained with nickel percentages of much less than 29.7%, the maximum effect in terms of signal and duration is attained at 29.7% for the ductile deformation. On the other hand, above 30%, e.g., in the range associated with a brittle deformation, the more nickel, the higher temperature at which the effect starts during the cooling is reduced. Therefore, at much higher percentages than 30% there may not be enough time available for calibration of the monitoring and surveillance system.

**Claims**

1. An acoustic signal generator system comprising: a sample (S) of metal alloy with an austenite phase which changes into martensite; transducer means (TD) to convert acoustic waves generated by said sample upon transformation of austenite into martensite (S) into an electrical signal characterized by said sample (S) being a composition of iron and nickel; means for cooling (BT, RD) said sample to substantially transform said austenite phase into martensite; means associated with said sample for propagating acoustic waves (WG) emitted by said austenite to martensite transformation toward a remote body (WR) to which the transducer means (TD) is coupled.

2. An acoustic generator system as defined in claim 1, characterized in that the body (WR) is a metal piece whose integrity is to be monitored, said propagating means (WG) propagates said emitted acoustic waves to said metal piece (WR) at at least one location thereof, said transducer means being coupled to said metal piece at least at another location thereof, whereby said electrical signal is characteristic of acoustic wave propagated through said metal piece from said at least one location to said at least another location.

3. An acoustic generator system as defined in claim 2, characterized in that said metal piece (WR) is the wall (WR) of a nuclear vessel, said transducer means (TD) including a plurality of transducers (TD) disposed at several said another locations ($L_1$, $L_2$, $L_3$) against the wall of said nuclear vessel, with a vessel integrity system associated with said transducers for monitoring and surveillance of said vessel wall, said vessel integrity system being calibrated with acoustic signals derived from said transducers during said austenite to martensite transformation of said sample.

4. An acoustic generator system as defined in claim 1, 2 or 3 characterized in that said sample has a percentage of nickel of at most 29.7%.

5. An acoustic generator system as defined in claim 1, 2 or 3, characterized in that said sample has a percentage of nickel of at least 30%.

6. An acoustic generator system as defined in claim 1, 2 or 3 characterized in that said sample has a percentage of nickel in the range of 29.7% to 30%.

7. An acoustic generator system as defined in claim 3 characterized in that a second said sample is associated with said cooling means and said propagating means, the first mentioned sample having a composition including at most 29.7% of nickel, said second sample having a composition including a least 30% of nickel.

8. An acoustic generator system as defined in claim 7 characterized in that a third said sample is associated with said cooling means and said propagating means, said third sample having a composition including nickel in the range between 29.7% and 30%.

**Revendications**

1. Système générateur de signaux acoustiques comprenant un échantillon (S) d'alliage métallique comportant une phase austénite qui se transforme en martensite; des moyens formant transducteurs (TD) pour convertir en signaux électriques les ondes acoustiques créées par cet échantillon (S) lors de la transformation d'austénite en martensite, ce système étant caractérisé en ce que l'échantillon (S) est un alliage fer-nickel; et en ce qu'il comprend des moyens (BT, RD) pour refroidir cet échantillon afin de transformer sensiblement la phase austénite en martensite; et un moyen (WG) associé à cet échantillon pour propager les ondes acoustiques émises par la transformation d'austénite en martensite, vers un corps éloigné (WR) auquel sont couplés les moyens (TD) formant transducteurs.

2. Système générateur de signaux acoustiques suivant la revendication 1, caractérisé en ce que le corps (WR) est une pièce métallique dont l'intégrité doit être contrôlée, le moyen (WG) de propagation propage les ondes acoustiques émises jusqu'à cette pièce métallique (WR) en au moins un de ses points, les moyens formant transducteurs étant couplés à cette pièce métallique en au moins un autre de ses points, le signal électrique étant de ce fait caractéristique de l'onde acoustique propagée à travers la pièce métallique d'au moins un point à au moins un autre point.

3. Système générateur de signaux acoustiques suivant la revendication 2, caractérisé en ce que cette pièce métallique (WR) est la paroi (WR) d'une cuve de réacteur nucléaire, les moyens (TD) formant transducteurs comprenant une pluralité de transducteurs (TD) placés en plusieurs de ces autres points ($L_1$, $L_2$, $L_3$) contre la paroi de la cuve de réacteur nucléaire, un système de surveillance et de contrôle de l'intégrité de la cuve étant associé à cest transducteurs pour contrôler et surveiller la paroi de la cuve, ce système de surveillance et de contrôle de l'intégrité de la cuve étant étalloné au moyen de signaux acoustiques envoyés par les transducteurs pendant la transformation d'austénite en martensite de l'échantillon.

4. Système générateur de signaux acoustiques suivant l'une des revendications 1, 2 ou 3, caractérisé en ce que l'échantillon a une teneur en nickel inférieure ou égale à 29,7%.

5. Système générateur de signaux acoustiques suivant l'une des revendications 1, 2 ou 3, caractérisé en ce que l'échantillon a une teneur en nickel supérieure ou égale à 30%.

6. Système générateur de signaux acoustiques suivant l'une des revendications 1, 2 ou 3, caractérisé en ce que l'échantillon a une teneur en nickel comprise entre 29,7% et 30%.

7. Système générateur de signaux acoustiques suivant la revendication 3, caractérisé en ce qu'un deuxième échantillon est associé aux moyens de refroidissement et au moyen de propagation, le premier échantillon mentionné ayant une teneur en nickel inférieure ou égale à 29.7% et le deuxième échantillon une teneur en nickel supérieure ou égale à 30%.

8. Système générateur de signaux acoustiques suivant le revendication 7, caractérisé en ce qu'un troisième échantillon est associé aux moyens de refroidissement et au moyen de propagation, ce troisième échantillon ayant une teneur en nickel comprise entre 29,7% et 30%.

**Patentansprüche**

1. Akustisches Signal-Generatorsystem, in dem ein Prüfkörper (S) aus einer Metallegierung mit einer Austenit-Phase enthalten ist, die sich in Martensit umwandelt, sowie Wandlervorrichtungen (TD), mit denen akustische Wellen, die im Prüfkörper being Übergang von Austenit in Martensit entstehen, in ein elektrisches Signal umgewandelt werden, dadurch gekennzeichnet, daß der Prüfkörper (S) eine Zusammensetzung mit Eisen und Nickel aufweist, daß Vorrichtungen (BT, RD) vorgesehen sind, mit denen der Prüfkörper abgekühlt wird, um die Austenit-Phase in Martensit umzuwandeln, und daß zum Prüfkörper Vorrichtungen gehören, mit denen die beim Austenit-Martensit-Übergang ausgesandten akustischen Wellen (WG) zu einem entfernt gelegenen Körper (WR) übertragen werden, der mit den Wandlervorrichtungen (TD) gekoppelt ist.

2. Akustisches Generatorsystem nach Anspruch 1, dadurch gekennzeichnet, daß der Körper (WR) ein Metallstück ist, dessen Integrität zu überwachen ist, daß die Übertragungsvorrichtungen (WG) die ausgesandten akustischen Wellen zu mindestens einer Stelle des Metallstücks (WR) weiterleiten und daß die Wandlervorrichtungen mit mindestens einer weiteren Stelle des Metallstücks verbunden sind, so daß das elektrische Signal charakteristisch für die akustische Welle ist, die durch das Metallstück von der einen zu der mindestens einer weiteren Stelle gelaufen ist.

3. Akustisches Generatorsystem nach Anspruch 2, dadurch gekennzeichnet, daß das Metallstück (WR) die Wand (WR) eines Kernreaktor-Gefäßes ist und daß die Wandlervorrichtungen (WD) eine Mehrzahl von Wandlern (TD) enthalten, die an verschiedenen anderen Stellen ($L_1$, $L_2$, $L_3$) an der Wand des Reaktorgefäßes angeordnet sind, wobei den Wandlern ein Reaktorgefäß-Integritäts-System zugeordnet ist, das die Wand des Reaktorgefäßes überwacht und das mit akustischen Wellen kalibriert wird, die von den Wandlern während des Austenit-Martensit-Übergangs des Prüfkörpers abgenommen werden.

4. Akustisches Generatorsystem nach Anspruch 1, 2 oder 3, dadurch gekennzeichnet, daß der Prüfkörper einen Nickelgehalt von höchstens 29,7% aufweist.

5. Akustisches Generatorsystem nach Anspruch 1, 2 oder 3, dadurch gekennzeichnet, daß der Prüfkörper einen Nickelgehalt von mindestens 30% aufweist.

6. Akustisches Generatorsystem nach Anspruch 1, 2 oder 3, dadurch gekennzeichnet, daß der Prüfkörper einen Nickelgehalt im Bereich von 29.7% bis 30% aufweist.

7. Akustisches Generatorsystem nach Anspruch 3, dadurch gekennzeichnet, daß ein zweiter Prüfkörper mit den Kühlvorrichtungen und den Übertragungsvorrichtungen verbunden ist, wobei der erste Prüfkörper eine Zusammensetzung aufweist, die höchstens 29,7% Nickel enthält und der zweite Prüfkörper eine Zusammensetzung mit mindestens 30% Nickel.

8. Akustischer Signalgenerator nach Anspruch 7, dadurch gekennzeichnet, daß ein dritter Prüfkörper mit den Kühlvorrichtungen und den Übertragungsvorrichtungen verbunden ist und der dritte Prüfkörper eine Zusammensetzung aufweist, die Nickel im Bereich zwischen 29.7% und 30% enthält.

FIG. I

(X 52,400)

FIG. 2

(X 30,100)

FIG.3A

FIG.3B

S(Fe-Ni SAMPLE)
WR
WG
WAVE INJECTOR
RD
BT(LIQUID N2)
L1 TD
L2 TD
L3 TD
DETECTED SIGNAL OUTPUT (TO AE MONITORING INSTRUMENTATION)

FIG. 4

FIG. 5

0 055 125